# EUROPEAN PATENT APPLICATION

(11) **EP 2 469 032 A2**
(43) Date of publication of application: **27.06.2012**
(21) Application number: 11195796.5
(22) Date of filing: 27.12.2011
(51) Int. Cl.: F01D 5/28

(54) **Titanium alloy turbine blade**

(30) Priority: 27.12.2010 JP 2010289354
(71) Applicant: Hitachi Ltd., Tokyo 100-8280 (JP)
(72) Inventor: Imano, Shinya, Tokyo, 100-8220 (JP); Kamoshida, Hironori, Tokyo, 100-8220 (JP); Hirano, Satoshi, Tokyo, 100-8220 (JP); Murata, Kenichi, Tokyo, 100-8220 (JP); Park, Seunghwan, Tokyo, 100-8220 (JP); Asai, Kunio, Tokyo, 100-8220 (JP); Yoshida, Takehiko, Tokyo, 100-8220 (JP)
(74) Representative: Beetz & Partner

(57) **Abstract**

It is an objective of the present invention to provide an effective use of the friction stir processing (FSP) technology for Ti-alloy turbine blades with a long radial length, and provide a Ti-alloy turbine blade having both high erosion resistance and high long term reliability. There is provided a turbine blade made of an α-β titanium alloy having an average Vickers hardness of 320 Hv or less, the turbine blade having a leading edge, in which: the turbine blade includes, at the leading edge thereof, a first hardened surface region having a thickness of from 0.5 to 3.0 mm and having an average Vickers hardness of 340 Hv or more; and the first hardened surface region is formed by friction stir processing a surface region of the leading edge of the turbine blade.

## Description

### BACKGROUND OF THE INVENTION

### 1. Field of the Invention

The present invention relates to turbine blades, and particularly to turbine blades having high erosion resistance and high long-term reliability and usable for gas, steam and other turbines.

### 2. Description of Related Art

The final stage blades for steam and other turbines are often made of a light-weight titanium (Ti) alloy since such blades are radially long and therefore experience a strong centrifugal force. In addition, the radially outer portion of such blades tends to become worn by erosion since such outer portion moves faster than the inner portion and is therefore subject to impingement of higher speed water particles. Hence, materials for long blade turbines require both high mechanical strength and high erosion resistance.

Harder materials have higher erosion resistance. However, harder materials have poorer toughness. The toughness is another important mechanical property required by turbine blades. So far, such materials having both sufficient erosion resistance and sufficient toughness have not yet been found. Current solutions to this problem include: bonding an erosion shield to a problematic blade portion susceptible to the most erosive attack; and hardening the surface of such problematic blade portion.

Methods for hardening the surface of Ti alloys include surface nitridation and shot peening. Surface nitridation methods involve nitriding a surface of Ti (several tens of microns) to form titanium nitride (TiN), thereby providing surface hardening. Such surface nitridation methods have the advantage of being able to form a very hard TiN surface layer. However, such a hardened surface (TiN surface) is very thin, and therefore is susceptible to damages caused by bombarding objects or other factors, leading to insufficient long term reliability. Shot peening methods can harden a thicker surface (several hundreds of microns) than those provided by surface nitridation methods, but can provide only an insufficient hardening effect. Furthermore, in order to achieve sufficient long term reliability required by turbine blades, still thicker hardened surfaces than those provided by the above two methods are required.

In recent years, there have been investigated friction stir techniques, which can be used for surface hardening. For example, friction stir welding (FSW) techniques involve: pressing, into the contact region between two workpieces, a friction stir tool (made of a material harder than those of the workpieces); rotating the tool at a high speed to generate friction heat and plasticize the two workpiece materials to cause plastic flow; and mixing the two workpiece materials at the contact region, thereby bonding the two workpieces. Friction stir processing (FSP) techniques involve reducing the average grain size of a local region of a workpiece by the recrystallization caused by the friction heat generated by the rotation of the above-described friction stir tool, thereby increasing the mechanical properties (such as strength and hardness) of the local workpiece region.

JP-A 2008-196020 discloses that friction stir processing of a Ti (or Ti alloy) workpiece is performed by using a Ni-alloy friction stir tool whose surface is implanted with fluorine. The fluorine implantation increases the hardness (and therefore the wear resistance) of the surface of the friction stir tool. Also, the fluorine implanted Ni-alloy friction stir tool is cheaper than conventional ones made of a tungsten-rhenium alloy. Hence, friction stir processings of Ti (or Ti-alloy) workpieces can be performed at lower cost.

JP-A 2002-248583 discloses that friction stir welding or processing of a workpiece is performed while removing an ambient air or liquid surrounding the workpiece portion to be welded or processed by purging with a non-oxidizing gas. By using this technique, a damaged steam turbine blade can be repaired. That is, cracks present in a local surface of a turbine blade can be removed by the stirring and compressive stress produced by the rotary and pressing forces of the friction stir tool used. This technique is also applicable to easily oxidized metallic materials such as zirconium, titanium and magnesium alloys because of the non-oxidizing ambient used.

As described above, friction stir processing (FSP) techniques are very promising for surface reforming of Ti alloys. However, the FSP technology is still in development and has many unsolved technical problems. For example, the FSP condition for a particular workpiece strongly depends upon the material and shape of the workpiece. Thus, the FSP techniques disclosed so far are not always satisfactorily helpful in applying the FSP technology to individual specific cases.

In particular, when the FSP technology is applied to low Young's modulus Ti-alloy turbine blades with a long radial length, the processed blade tends to suffer from bending or cracks due to residual stresses.

### SUMMARY OF THE INVENTION

In view of the above problems, it is an objective of the present invention to provide an effective use of the friction stir processing (FSP) technology for Ti-alloy turbine blades with a long radial length, and provide a Ti-alloy turbine blade having both high erosion resistance and high long term reliability.
(I) According to one aspect of the present invention, there is provided a turbine blade made of an α-β titanium alloy having an average Vickers hardness of 320 Hv or less, the turbine blade having a leading edge, in which: the turbine blade includes, at the leading edge thereof, a first hardened surface region having a thickness of from 0.5 to 3.0 mm and having an average Vickers hardness of 340 Hv or more; and the first hardened surface region is formed by friction stir processing a surface region of the leading edge of the turbine blade. The term "a leading edge of a turbine blade", as used herein and in the appended claims, refers to the edge of the turbine blade that leads the turbine blade when the turbine turns.

In the above aspect (I) of the invention, the following modifications and changes can be made.
(i) The turbine blade further includes, at the leading edge thereof, a second hardened surface region having an average Vickers hardness higher than that of the α-β titanium alloy, the second hardened surface region being formed by the steps of: removing a surface portion of a part of the first hardened surface region; inserting a Ti alloy patch plate having an average Vickers hardness higher than that of the α-β titanium alloy into the remaining space left by the removal step; and bonding by friction surface welding.
(II) According to another aspect of the present invention, there is provided a turbine blade made of an α-β titanium alloy having an average Vickers hardness of 320 Hv or less, the turbine blade having a leading edge, in which the turbine blade including, at the leading edge thereof, a second hardened surface region having an average Vickers hardness higher than that of the α-β titanium alloy, the second hardened surface region being formed by the steps of: removing a surface portion of a part of the leading edge of the turbine blade; inserting a Ti alloy patch plate having an average Vickers hardness higher than that of the α-β titanium alloy into the remaining space left by the removal step; and bonding by friction surface welding.

In the above aspects (I) and (II) of the invention, the following modifications and changes can be made.
(ii) The second hardened surface region includes a third hardened surface region, the third hardened surface region being formed by friction stir processing a surface region of the second hardened surface region.
(iii) The third hardened surface region has an average Vickers hardness of 440 Hv or more.

### (Advantages of the Invention)

According to the present invention, it is possible to provide an effective use of the friction stir processing (FSP) technology for Ti-alloy turbine blades with a long radial length, and to provide a Ti-alloy turbine blade having both high erosion resistance and high long term reliability.

### BRIEF DESCRIPTION OF THE DRAWINGS

FIG. 1 is a schematic illustration showing an example of a friction stir processing of a turbine blade.
FIG. 2 is a graph showing, for Example 1 and Comparative Example 1, an example of a relationship between depth from surface and Vickers hardness.
FIG. 3 is a schematic illustration showing another example of a friction stir processing of a turbine blade.
FIG. 4 is a graph showing, for Examples 2 and 3, an example of a relationship between depth from surface and Vickers hardness.

### DETAILED DESCRIPTION OF THE PREFERRED EMBODIMENTS

Preferred embodiments of the present invention will be described below in detail with reference to the accompanying drawings. However, the invention is not limited to the specific embodiments described below, but various combinations and modifications are possible without departing from the spirit and scope of the invention.

The present inventors have intensively investigated the FSP surface hardening technology in order to improve the erosion resistance of turbine blades made of an α-β titanium alloy such as a 64-Ti alloy (Ti-6Al-4V), as a base material, and have found the following: Surface hardening can be accomplished even for turbine blades having a long radial length by controlling an FSP depth to from 0.5 to 3.0 mm without causing any blade bending or sacrificing the long term reliability. The result is described more specifically below.

The invented FSP surface hardening treatment can increase the Vickers hardness of 64-Ti alloys used for turbine blades to about more than 350 Hv compared to the typical hardness of about 280 to 320 Hv for non-treated 64-Ti alloys, thereby also improving the erosion resistance of the 64-Ti alloys. The hardened surface region by the invented FSP surface hardening treatment to the base material is referred to a first hardened surface region, in the invention. Preferably, a finishing treatment is performed after the invented FSP surface hardening treatment to obtain a smooth surface.

When an FSP depth (a thickness of the surface region subjected to the FSP surface hardening treatment) is less than 0.5 mm, the resulting turbine blade is susceptible to damages caused by bombarding objects or other accidents, and therefore has insufficient long term reliability. An FSP depth deeper than 3 mm is not preferable because it decreases the toughness of the resulting blade, thereby degrading the crack growth resistance. In other words, once a crack occurs in a turbine blade, the crack tends to easily grow to such a critical length as to destroy the turbine blade. Such low crack growth resistance leads to poor long term reliability. However, Ti-alloy long turbine blades having both good erosion resistance and high long term reliability can be obtained by controlling the FSP depth to from 0.5 to 3.0 mm.

Another effective method for improving the erosion resistance of a T-alloy turbine blade includes the steps of: removing a surface portion of the turbine blade which is likely to experience the most erosive attack during use; fitting a new Ti alloy patch plate having almost the same shape as the removed portion and having a Vickers hardness greater than the removed portion into the remaining space left by the removal; and bonding by FSW (friction stir welding). For example, when a turbine blade is made of a 64-Ti alloy, a patch plate made of a β-Ti alloy (which is harder than the 64-Ti alloy) is bonded, thereby improving the erosion resistance of the 64-Ti alloy. Such a bonded patch plate having a Vickers hardness greater than the base material is referred to a second hardened surface region, in the invention.

In addition, the bonded patch plate may be further subjected to the above-described invented FSP surface hardening treatment in order to provide a still greater hardness. The hardened surface region by the invented FSP surface hardening treatment to the bonded patch plate is referred to a third hardened surface region, in the invention. This combined FSW bonding and FSP surface hardening method can provide a still higher erosion resistance Ti alloy turbine blade usable in extremely high erosive environments.

The above-described FSW bonding method can also be effectively used for repairing of damaged turbine blades. For example, a surface portion of a turbine blade that becomes damaged through use is removed and then a β-Ti alloy (harder than the removed portion) is inserted into and FSW bonded to the remaining space left by the removal, followed by the invented FSP surface hardening treatment as needed. When the turbine blade is used in a relatively low erosive environment, the same 64-Ti alloy as the removed portion may be used for the FSW bonding, followed by the FSP surface hardening treatment as needed.

The invention will be described more specifically below by way of examples. However, the invention is not limited to the specific examples below.

### (Example 1)

Table 1 shows nominal compositions of alloys used to form example turbine blades. As shown in Table 1, Alloy 1 is a 64-Ti alloy (a type of α-β titanium alloy) and Alloy 2 is a type of β-Ti alloy.

**Table 1 Nominal composition of alloy.**

| (mass%) | | | | | |
|---|---|---|---|---|---|
| | Al | V | Mo | Zr | Ti |
| | (aluminum) | (vanadium) | (molybdenum) | (zirconium) | (titanium) |
| Alloy 1 | 6.1 | 3.9 | - | - | Balance |
| Alloy 2 | 3.1 | - | 15.1 | 4.8 | Balance |

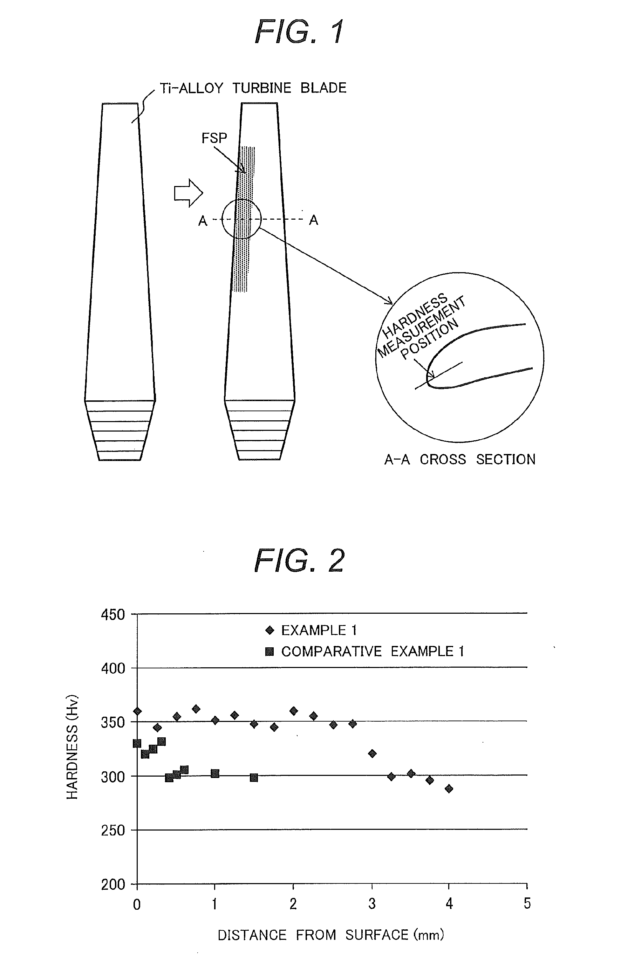

A turbine blade of Example 1 was fabricated as follows: First, an ingot of Alloy 1 was prepared by vacuum arc remelting (VAR). Then, an about 1016 mm long turbine blade was formed by free and die hot forging the ingot. Finally, as illustrated in Fig. 1, a surface region (about 3.0 mm depth) of a leading edge of the thus formed turbine blade was subjected to the above-described FSP surface hardening treatment. Figure 1 is a schematic illustration showing an example of a friction stir processing of a turbine blade. Comparative Example 1 turbine blade was also fabricated in the same manner as Example 1 except that a shot peening treatment was used instead of the FSP surface hardening treatment. Neither Example 1 nor Comparative Example 1 exhibited any blade bending.

For each blade, Vickers hardnesses on the A-A cross section of the hardened region were measured along the depth direction from the surface (see Fig. 1). Here, the Vickers hardness at a depth of zero was measured on the surface of the hardened region, not on the A-A cross section. The result is shown in Fig. 2. Figure 2 is a graph showing, for Example 1 and Comparative Example 1, an example of a relationship between depth from surface and Vickers hardness.

As shown in Fig. 2, the shot peening treatment used in Comparative Example 1 provided only a relatively small hardening effect (an increase of about 30 Hv from the hardness of the pre-hardened alloy) in only a relatively thin surface region (less than several hundreds of microns). In contrast, the FSP surface hardening treatment used in Example 1 provided a relatively large hardening effect (an increase of about 50 Hv) in a relatively thick surface region (about 3.0 mm). Furthermore, the Example 1 turbine blade does not suffer from any unstable fracture because the thickness of the hardened surface region is limited to 3 mm or less. Thus, the turbine blade of Example 1 has sufficiently high erosion resistance and sufficiently high long term reliability to be used in actual operating environments.

### (Examples 2 and 3)

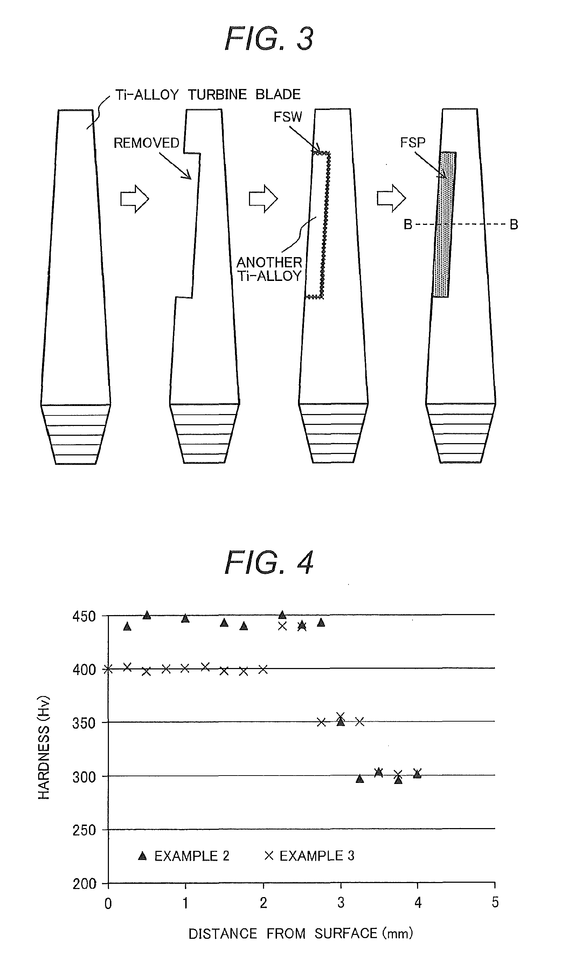

A turbine blade of Example 2 was fabricated as follows: First, an about 1016 mm long turbine blade was formed in the same manner as used in Example 1. Next, as illustrated in Fig. 3, a surface portion of a leading edge of the turbine blade was removed and then a forged patch plate of Alloy 2 was FSW bonded to the remaining turbine blade in such a manner as to fill the remaining space left by the removal operation. Finally, a surface region (about 3.0 mm depth) of the bonded Alloy 2 patch plate was subjected to the above-described FSP surface hardening treatment. Figure 3 is a schematic illustration showing another example of a friction stir processing of a turbine blade. Example 3 turbine blade was also fabricated in the same manner as Example 2 except that the final FSP surface hardening treatment was not performed. Neither Example 2 nor 3 exhibited any blade bending.

For each blade, Vickers hardnesses on the B-B cross section of the bonded area were measured along the depth from the surface (see Fig. 3). Here, the Vickers hardness at a depth of zero was measured on the surface of the bonded Alloy 2 patch plate. The result is shown in Fig. 4. Figure 4 is a graph showing, for Examples 2 and 3, an example of a relationship between depth from surface and Vickers hardness.

As shown in Fig. 4, a surface region of the bonded area in Example 3 had the same Vickers hardness as that of the bonded Alloy 2 plate (about 400 Hv) because of the absence of the FSP surface hardening treatment, even then having a higher Vickers hardness than the base alloy of Alloy 1. On the other hand, the FSP surface hardening treatment used in Example 2 further increased the Vickers hardness to about 450 Hv in a relatively thick surface region (as thick as about 3.0 mm) of the bonded area. Examples 2 and 3 provide higher hardness and therefore higher erosion resistance than Example 1. Also, like Example 1, the Examples 2 and 3 turbine blades do not suffer from any unstable fracture because the thickness of the hardened surface region is limited to 3 mm or less. Thus, the turbine blades of Examples 2 and 3 also have sufficiently high erosion resistance and sufficiently high long term reliability to be used in actual operating environments.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A turbine blade made of an α-β titanium alloy having an average Vickers hardness of 320 Hv or less, the turbine blade having a leading edge, the turbine blade including, at the leading edge thereof, a first hardened surface region having a thickness of from 0.5 to 3.0 mm and having an average Vickers hardness of 340 Hv or more, the first hardened surface region being formed by friction stir processing a surface region of the leading edge of the turbine blade.

2. The turbine blade according to Claim 1, wherein
the turbine blade further includes, at the leading edge thereof, a second hardened surface region having an average Vickers hardness higher than that of the α-β titanium alloy,
the second hardened surface region is formed by the steps of:
removing a surface portion of a part of the first hardened surface region;
inserting a Ti alloy patch plate having an average Vickers hardness higher than that of the α-β titanium alloy into the remaining space left by the removal step; and
bonding by friction surface welding.

3. The turbine blade according to Claim 2, wherein the second hardened surface region includes a third hardened surface region, the third hardened surface region being formed by friction stir processing a surface region of the second hardened surface region.

4. The turbine blade according to Claim 3, wherein the third hardened surface region has an average Vickers hardness of 440 Hv or more.

5. A turbine blade made of an α-β titanium alloy having an average Vickers hardness of 320 Hv or less, the turbine blade having a leading edge, the turbine blade including, at the leading edge thereof, a second hardened surface region having an average Vickers hardness higher than that of the α-β titanium alloy, the second hardened surface region being formed by the steps of:
removing a surface portion of a part of the leading edge of the turbine blade;
inserting a Ti alloy patch plate having an average Vickers hardness higher than that of the α-β titanium alloy into the remaining space left by the removal step; and
bonding by friction surface welding.

6. The turbine blade according to Claim 5, wherein the second hardened surface region includes a third hardened surface region, the third hardened surface region being formed by friction stir processing a surface region of the second hardened surface region.

7. The turbine blade according to Claim 6, wherein the third hardened surface region has an average Vickers hardness of 440 Hv or more.
